# FASCICULE DE BREVET EUROPEEN

(11) **EP 3 481 659 B1**
(45) Date de publication et mention de la délivrance du brevet: **01.09.2021**
(21) Numéro de dépôt: 17742819.0
(22) Date de dépôt: 29.06.2017
(51) Int. Cl.: B60K 11/08, B29C 45/16

(54) **ORIENTATION DE FLUX D'AIR DANS UN DISPOSITIF D'OBTURATION**
AUSRICHTUNG EINES LUFTSTROMS IN EINER DICHTUNGSVORRICHTUNG
ORIENTATION OF AN AIR FLOW IN A SEALING DEVICE

(30) Priorité: 07.07.2016 FR 1656517
(43) Date de publication de la demande: 15.05.2019
(73) Titulaire: Valeo Systemes Thermiques, 78320 Le Mesnil Saint Denis (FR)
(72) Inventeur: VACCA, Frédéric, 78322 LE MESNIL SAINT DENIS CEDEX (FR); GERBER, Sylvain, 78322 LE MESNIL SAINT DENIS CEDEX (FR)
(74) Mandataire: Tran, Chi-Hai
(86) Numéro de dépôt international: PCT/FR2017/051741
(87) Numéro de publication internationale: WO 2018/007722

(56) Documents cités:
- EP-A1- 2 080 658
- EP-A1- 3 475 113
- DE-A1-102013 000 628
- DE-A1-102014 001 927
- DE-C1- 4 123 271
- FR-A1- 3 008 060
- US-A1- 2001 027 883
- US-A1- 2007 243 818
- US-A1- 2012 048 633
- US-A1- 2013 175 011

## Description

La description a notamment pour objet un dispositif d'obturation pour face avant de véhicule automobile, également appelé obturateur actif de calandre, ou encore dispositif de contrôle d'entrée d'air. Un tel dispositif est parfois désigné par l'acronyme AGS, provenant de l'expression de langue anglaise "Active Grille Shutter" (obturateur actif de calandre).

L'aérodynamisme d'un véhicule automobile est une caractéristique importante car il influence notamment la consommation de carburant (et donc la pollution) ainsi que les performances dudit véhicule. Ceci est particulièrement important lorsque le véhicule automobile se déplace à haute vitesse.

Un dispositif d'obturation pour face avant permet d'ouvrir ou de fermer l'accès de l'air via une calandre de véhicule automobile. En position ouverte, l'air peut circuler à travers la calandre et participer au refroidissement du moteur du véhicule automobile. En position fermée, l'air ne pénètre pas via la calandre ce qui réduit la traînée et permet ainsi de réduire la consommation de carburant et l'émission de CO2. L'AGS permet donc de réduire la consommation d'énergie et la pollution lorsque le moteur n'a pas besoin d'être refroidi par l'air extérieur.

Les faces avant des véhicules automobiles sont généralement composées de deux entrées d'air principales dites voie haute et voie basse. Ces deux voies sont généralement séparées par une poutre pour la protection contre les chocs (poutre de pare-chocs).

Les échangeurs de chaleur du véhicule automobile sont généralement disposés derrière cette poutre.

Un dispositif d'obturation pour face avant comprend habituellement des volets pilotés par un actionneur en face avant afin de réduire le coefficient de traînée et aussi d'améliorer les performances de refroidissement et de climatisation. Ces volets sont habituellement plans, et sont généralement orientés verticalement (dans un référentiel du véhicule automobile dans lequel ils sont montés) en position fermée et horizontalement (dans ce même référentiel) en position ouverte. Ces volets, pivotants, peuvent se déplacer entre une position ouverte, dans laquelle le plan que constitue chaque volet est parallèle au flux d'air entrant dans le véhicule automobile et une position fermée, dans laquelle le plan que constitue chaque volet est perpendiculaire au flux d'air. Ainsi, par temps froid, on peut fermer les volets ce qui permet de chauffer plus vite le moteur ainsi que l'habitacle, puis ouvrir ces volets en fonction des besoins de refroidissement du moteur et/ou de l'habitacle.

Il arrive que des contraintes (qui peuvent être liées par exemple à la forme du véhicule) empêchent de placer les échangeurs de chaleur dans l'alignement exact du flux d'air pénétrant dans le véhicule via la face avant du véhicule. Dans ces circonstances, une partie des échangeurs de chaleurs n'est jamais atteinte par le flux d'air et n'est donc pas refroidie de façon optimale. Il serait possible de remédier à cette difficulté en orientant les volets du dispositif d'obturation de façon à dévier le flux d'air convenablement. Mais afin de dévier suffisamment le flux d'air, des volets très larges peuvent être nécessaires. Le couple nécessaire pour faire tourner de tels volets très larges (afin de les orienter de manière optimale) peut donc être très élevé. Afin d'éviter d'être confronté à une telle difficulté, il pourrait être envisageable de placer un déflecteur fixe entre les volets mobiles de la face avant et les échangeurs. Ainsi, les volets mobiles assureraient l'ouverture et la fermeture de la face avant, et lorsque celle-ci est ouverte, le déflecteur fixe assurerait le refroidissement de la partie d'échangeur non atteinte en son absence. Mais en cas de recours à un tel déflecteur fixe, ce déflecteur fixe, qui serait très large, se trouverait sur le chemin critique en cas d'accident, et pourrait occasionner des dégâts éventuellement importants.

L'invention vise à améliorer la situation. Le document DE4123271 divulgue des profilés déflecteurs d'air répartis sur l'entrée d'air d'un conduit d'air entre la grille de radiateur et le radiateur, les déflecteurs étant disposés horizontalement pour former des conduits d'air. Le document DE102013000628 divulgue un joint d'étanchéité fait de deux matériaux différents et une entrée d'air avec des éléments mobiles d'obturations.

L'invention se rapporte notamment à un dispositif d'obturation selon la revendication 1. Le déflecteur fixe s'étend au moins en partie sur la largeur de l'entrée d'air. Bien évidemment, le déflecteur fixe peut s'étendre sur plus de la moitié de la largueur de l'entrée d'air, voire s'étendre sur l'intégralité de la largueur de l'entrée d'air.

Un tel dispositif d'obturation est avantageux notamment en ce que le déflecteur fixe peut être orienté pour dévier une partie du flux d'air entrant dans le dispositif d'obturation vers une partie d'un échangeur de chaleur (une zone périphérique de cet échangeur de chaleur), qui sinon ne serait pas exposée à ce flux d'air entrant et serait moins bien refroidie. Le dispositif d'obturation est également avantageux en ce que le premier matériau permet d'assurer la rigidité du déflecteur fixe. Cette rigidité doit en effet être suffisante pour que le flux d'air entrant ne déforme pas de manière trop importante ce déflecteur fixe, afin que ce déflecteur fixe puisse convenablement dévier ce flux d'air entrant. Le dispositif d'obturation est également avantageux en ce que, et qu'en cas d'accident, les parties en premier matériau (rigide) peuvent se briser tout en restant solidaires les unes des autres grâce au deuxième matériau (plus souple). Ainsi, on évite que le déflecteur fixe ne présente dans son ensemble une résistance plus importante que celle d'autres composants avoisinants (ce qui pourrait être le cas s'il était intégralement réalisé dans le premier matériau). Il est en effet préférable d'endommager par exemple le déflecteur fixe avec l'échangeur de chaleur plutôt que d'endommager l'échangeur de chaleur avec le déflecteur fixe. Ceci évite également de disperser des morceaux du déflecteur fixe dans le véhicule automobile (où ils pourraient occasionner des dégâts supplémentaires) ou dans l'environnement du véhicule automobile, où ils constitueraient des déchets éventuellement dangereux (un piéton ou un cycliste pourrait par exemple glisser dessus).

Le dispositif selon l'invention peut comporter une ou plusieurs des caractéristiques suivantes prises seules ou en combinaison.

L'invention se rapporte notamment à un dispositif d'obturation dans lequel la surface du déflecteur fixe est au moins deux fois plus importante que celle de chacun des volets mobiles.

L'invention se rapporte notamment à un dispositif d'obturation dans lequel le déflecteur fixe comprend plusieurs éléments longitudinaux parallèles réalisés avec le premier matériau, reliés entre eux par des ponts réalisés avec ce premier matériau, et plusieurs éléments longitudinaux parallèles réalisés avec le deuxième matériau.

L'invention se rapporte notamment à un dispositif d'obturation dans lequel le déflecteur fixe est obtenu par moulage par double injection.

L'invention se rapporte notamment à un dispositif d'obturation dans lequel le déflecteur fixe est obtenu par une injection du premier matériau suivie d'une injection du deuxième matériau.

L'invention se rapporte notamment à un dispositif d'obturation dans lequel le premier matériau est du polypropylène comprenant 30% de fibres de verre.

L'invention se rapporte notamment à un dispositif d'obturation dans lequel le deuxième matériau est de l'élastomère thermoplastique.

L'invention se rapporte notamment à un dispositif d'obturation dans lequel le déflecteur fixe est monté sur le dispositif d'obturation via une pièce en matériau au moins aussi rigide que le premier matériau.

L'invention se rapporte notamment à un dispositif d'obturation dans lequel les volets mobiles et le déflecteur fixe ont chacun une forme allongée, la direction longitudinale du déflecteur fixe et les directions longitudinales des volets mobiles étant parallèles.

D'autres caractéristiques et avantages de l'invention apparaîtront à la lecture de la description qui va suivre. Celle-ci est purement illustrative et doit être lue en regard des dessins annexés sur lesquels :
- la figure 1 est une vue en perspective d'un dispositif d'obturation selon l'invention, vu de face;
- la figure 2 est une vue en perspective d'un dispositif d'obturation selon l'invention, vu de dos, partiellement dissimulé par un échangeur de chaleur;
- la figure 3 est une coupe longitudinale d'un dispositif d'obturation selon l'invention;
- la figure 4 est une coupe longitudinale d'un dispositif d'obturation possible;
- la figure 5 est une vue en perspective d'un dispositif d'obturation selon l'invention, vu de dos.

En qualifiant un élément de supérieur, inférieur, au dessus de, au dessous de, vertical, horizontal, longitudinal, latéral, transversal, haut, bas, derrière, avant ou devant, on se réfère sauf précision contraire à la disposition de cet élément à l'état monté dans un véhicule automobile, dans un référentiel du véhicule, référentiel dont l'axe longitudinal est parallèle à la direction de déplacement du véhicule lorsque ce dernier avance en ligne droite en plaçant ses moyens de direction en position neutre, dont l'axe transversal est perpendiculaire à cette direction de déplacement tout en étant horizontal par rapport au véhicule, et dont l'axe vertical est parallèle à la verticale du véhicule.

Les réalisations suivantes sont des exemples. Bien que la description se réfère à un ou plusieurs modes de réalisation, ceci ne signifie pas nécessairement que chaque élément mentionné dans le cadre d'un mode de réalisation ne concerne que ce même mode de réalisation, ou que des caractéristiques de ce mode de réalisation s'appliquent seulement à ce mode de réalisation.

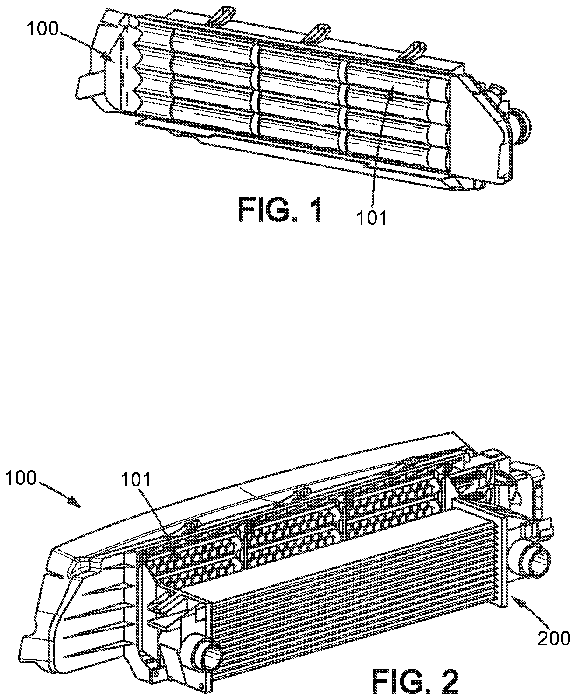

La figure 1 est une vue en perspective d'un dispositif d'obturation 100 selon l'invention, vu de devant. Ce dispositif est muni d'un volet mobile désigné par la référence 101, et de onze autres volets mobiles similaires (pouvant également être désignés par la référence 101). Ces volets sont typiquement mobiles en rotation autour d'un axe latéral. Ils sont typiquement pilotés par un actionneur non représenté (par exemple un moteur électrique), qui les ouvre ou les ferme selon les circonstances. Les parties visibles du dispositif d'obturation 100 de la figure 1 ne font pas apparaître toutes les caractéristiques revendiquées.

La figure 2 est une vue en perspective d'un dispositif d'obturation 100 selon l'invention (tel que représenté sur la figure 1), vu de derrière, partiellement dissimulé par un échangeur de chaleur 200. La figure 2 montre les positions respectives du dispositif d'obturation 100 et de l'échangeur de chaleur 200. Là encore, les parties visibles du dispositif d'obturation 100 de la figure 2 ne font pas apparaître toutes les caractéristiques revendiquées, certaines étant notamment dissimulées par l'échangeur de chaleur.

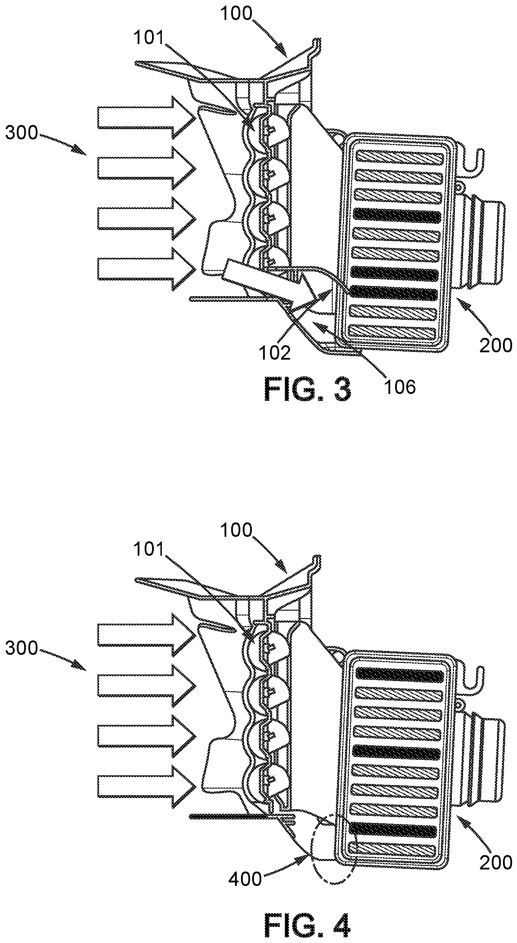

La figure 3 est une coupe longitudinale d'un dispositif d'obturation 100 selon l'invention. Ce dernier comprend des volets mobiles 101, qui selon qu'ils sont ouverts ou fermés laissent ou non passer un vent relatif 300. Sur la figure 3, les volets mobiles 101 sont ouverts et laissent passer le vent relatif 300. Un joint d'étanchéité 106 du dispositif d'obturation 100 relie le dispositif d'obturation à un échangeur de chaleur 200. Un déflecteur fixe 102 dévie une partie du vent relatif 300 vers une partie de l'échangeur de chaleur 200, qui sinon ne serait pas refroidie par le vent relatif.

La figure 4 est une coupe longitudinale d'un dispositif d'obturation possible reprenant de nombreuses caractéristiques de celui représenté sur la figure 3 (les références numériques identiques désignent des éléments identiques), mais ne mettant pas en œuvre l'invention. Il ne comprend pas de déflecteur fixe, et par conséquent ne dévie pas le vent relatif 300 vers la zone 400 de l'échangeur thermique, qui n'est donc pas aussi bien refroidie.

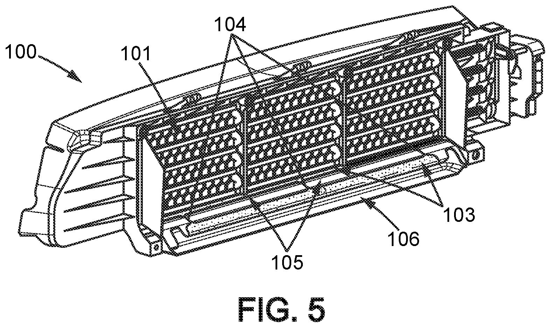

La figure 5 est une vue en perspective d'un dispositif d'obturation selon l'invention, vu de derrière. La figure 5 illustre plus spécifiquement une structure possible de déflecteur fixe (composé des éléments notés 103, 104, 105, 106). En l'espèce, le déflecteur fixe comprend des parties allongées 103 réalisées en matériau rigide, reliées par des ponts orthogonaux très fins 104 en matériau rigide (qui peut être le même matériau rigide que le matériau rigide utilisé pour les parties allongées 103, ou un matériau rigide différent). Les autres parties 105 du déflecteur fixe sont réalisées en matériau souple, comme le joint d'étanchéité 106. En cas de choc, les ponts peuvent se briser et permettre ainsi d'écraser le déflecteur fixe en comprimant ou en pliant les parties réalisées en matériau souple.

Selon un premier mode de réalisation, un dispositif d'obturation 100 d'une entrée d'air de véhicule automobile comprend un ensemble de volets mobiles 101 et un déflecteur fixe 102. Le nombre de volets mobiles 101 importe peu dans le cadre de l'invention. Il suffit que ce nombre soit adapté au véhicule considéré, et notamment à la surface de l'ouverture de la face avant, ou encore aux choix esthétiques du constructeur automobile, notamment. Les volets mobiles sont par exemple placés verticalement ou horizontalement. Selon une mise en œuvre possible, le dispositif d'obturation comprend au moins trois volets 101.

Le déflecteur fixe 102 comprend un premier et un deuxième matériaux, le premier matériau étant plus rigide que le deuxième matériau.

Selon une mise en œuvre possible, le déflecteur fixe 102 ne comprend que deux matériaux, l'un étant plus rigide que l'autre. Selon une mise en œuvre possible, le déflecteur fixe 102 comprend une première série de matériaux dits rigides, et une deuxième série de matériaux dits souples. Il peut également n'y avoir qu'un seul matériau rigide et plusieurs matériaux souples, ou réciproquement.

Les termes souple et rigide sont entendus de façon relative. Un matériau rigide est ainsi un matériau plus rigide qu'un matériau dit souple. En cas de pluralité de matériaux dits rigides et/ou dits souples, tout matériau dit rigide est plus rigide que tout matériau dit souple. Selon une mise en œuvre possible, par matériau rigide on entend matériau dont la résistance à la traction et la résistance à la flexion sont supérieurs à 4000 MPa. Selon une variante, ces résistances sont supérieures à 5000 MPa.

Le déflecteur fixe 102 est placé en aval de l'ensemble de volets mobiles 101. Par "placé en aval" on entend qu'un vent relatif (opposé au déplacement du véhicule automobile) atteint d'abord l'ensemble de volets mobiles 101 puis seulement après atteint le déflecteur fixe 102. Le déflecteur fixe 102 est agencé, lorsqu'il est installé dans un véhicule automobile, pour amener l'air (vent relatif) entrant par l'entrée d'air de véhicule automobile vers une zone périphérique d'un échangeur de chaleur 200 du véhicule automobile. Cette zone périphérique est par exemple située en bas de l'échangeur de chaleur. Pour des raisons tenant par exemple à l'espace disponible dans le véhicule automobile, l'échangeur thermique peut en effet se trouver abaissé par rapport à l'entrée d'air, et un flux d'air entrant non dévié pourrait alors ne pas atteindre le bas de l'échangeur thermique. Bien sûr, d'autres zones périphériques sont possibles, selon notamment l'agencement de l'entrée d'air par rapport à l'échangeur thermique.

Selon une mise en œuvre possible, les parties en matériau rigide sont telles qu'elles se déforment très peu même en présence d'un vent relatif fort (par exemple un vent relatif correspondant à un déplacement du véhicule automobile muni du dispositif d'obturation, à une vitesse élevée, telle que 80km/h). Si ces parties étaient réalisées en matériau souple, elles se déformeraient beaucoup plus.

A partir d'une certaine vitesse (par exemple 80km/h), les volets mobiles du dispositif d'obturation sont généralement fermés (le déflecteur fixe n'est donc pas soumis à un vent relatif important), afin de réduire la traînée. A partir de cette vitesse, un vent relatif atteint de toute façon l'échangeur thermique (le véhicule automobile n'étant pas parfaitement étanche à l'air). A cette vitesse (ou à des vitesses supérieures), l'échangeur thermique est donc refroidi même si les volets mobiles sont fermés (par exemple, de l'air peut passer par le dessous du véhicule). Selon une mise en œuvre possible, le déflecteur fixe n'a pas besoin d'être dimensionné pour ne pas se déformer substantiellement face à des vents relatifs correspondant à des vitesses du véhicule automobile dépassant un seuil à partir duquel les volets mobiles sont de toute façon fermés (par exemple 80km/h et plus).

Selon une mise en œuvre, la(les) partie(s) en matériau(s) rigide(s) se brise(nt) lorsqu'elle(s) est(sont) soumise(s) à un choc important alors que la(les) partie(s) en matériau(s) souple(s) se déforme(nt) lorsqu'elle(s) est(sont) soumise(s) à un choc important. Un choc important est un choc résultant par exemple d'un accident impliquant le véhicule automobile équipé du dispositif d'obturation, qui conduit à une déformation du dispositif d'obturation et/ou d'un échangeur thermique du véhicule automobile, et/ou encore qui conduit à un déplacement relatif du dispositif d'obturation et d'un échangeur thermique du véhicule automobile (qui sont en temps normal fixes l'un par rapport à l'autre).

Selon un deuxième mode de réalisation, la surface du déflecteur fixe 102 d'un dispositif d'obturation selon le premier mode de réalisation est au moins deux fois plus importante que celle de chacun des volets mobiles 101. Autrement dit, la surface du déflecteur fixe est au moins double de celle du volet mobile le plus grand (celui dont la surface est la plus importante), à supposer que les volets mobiles ne soient pas tous identiques. Le déflecteur fixe est donc susceptible d'être soumis à des forces plus importantes que celles s'appliquant sur les volets mobiles en raison du vent relatif.

Selon un troisième mode de réalisation, le déflecteur fixe 102 d'un dispositif d'obturation selon le premier ou le deuxième mode de réalisation comprend plusieurs éléments longitudinaux parallèles 103 réalisés avec le premier matériau, reliés entre eux par des ponts 104 réalisés avec ce premier matériau, et plusieurs éléments longitudinaux parallèles 105 réalisés avec le deuxième matériau.

Selon une mise en œuvre possible, le déflecteur fixe est formé d'une alternance d'éléments longitudinaux réalisés avec le premier matériau et avec le deuxième matériau, tous parallèles les uns aux autres, les ponts traversant les éléments longitudinaux réalisés avec le deuxième matériau afin de relier les éléments longitudinaux réalisés avec le premier matériau. Les ponts assurent ainsi une rigidité à l'ensemble de la structure résultante, qui forme le déflecteur fixe.

En cas de pression importante (résultant notamment d'un choc) selon l'axe de ces ponts, ces ponts peuvent ainsi se briser. L'ensemble de la structure peut alors se replier, à la manière d'un accordéon, grâce à la souplesse des éléments longitudinaux réalisés avec le deuxième matériau.

Selon une mise en œuvre possible, les ponts sont orthogonaux aux élément longitudinaux parallèles réalisés à l'aide du premier matériau.

Selon un quatrième mode de réalisation, le déflecteur fixe 102 d'un dispositif d'obturation selon l'un des premier au troisième modes de réalisation est obtenu par moulage par double injection. Ainsi, par une unique opération de moulage, on obtient le déflecteur fixe 102. Ceci évite la production séparée des parties rigides et souples du déflecteur fixe, puis leur assemblage. La production en est facilitée. La qualité résultante est également susceptible d'être supérieure, certains risques tels que les risques de mauvaises manipulations au stade de l'assemblage, ainsi que les risques que les parties à assembler ne soient pas exactement complémentaires, étant supprimés.

Selon un cinquième mode de réalisation, le déflecteur fixe 102 d'un dispositif d'obturation selon le quatrième mode de réalisation est obtenu par une injection du premier matériau en une seule fois, suivie d'une injection du deuxième matériau en une seule fois. Il est ainsi possible, par exemple, de procéder d'un coup à un moulage de la structure rigide du déflecteur fixe, puis de combler d'un coup les espaces comprenant les ponts rigides avec le deuxième matériau. Dans cet exemple, la deuxième injection permet de renforcer la structure (les ponts pouvant être structurellement fragiles bien que rigides) et de lier tous les éléments entre eux de façon à ce que le déflecteur fixe reste d'un seul tenant même lorsque un ou plusieurs ponts se brisent à la suite d'un choc.

Selon un sixième mode de réalisation, le premier matériau d'un dispositif d'obturation selon l'un des premier au cinquième modes de réalisation est un PPGF30. Un PPGF30 est obtenu en renforçant un matériau synthétique de base (du polypropylène, d'où la partie PP de l'acronyme), avec 30% de fibres de verre ("glass fiber" en anglais, d'où la partie GF de l'acronyme). Ce mélange accroît la rigidité et améliore la résistance du matériau composite, tout en garantissant une meilleure résistance à la déformation thermique. La résistance aux chocs diminue, tandis que la résistance à la traction et la résistance à la flexion augmentent respectivement (pour certains PPGF30), jusqu'à 6500 MPa et 5500 MPa. Sa densité est souvent d'environ 1,15 g/cm³.

Selon un septième mode de réalisation, le deuxième matériau d'un dispositif d'obturation selon l'un des premier au sixième modes de réalisation est un TPE. TPE est un acronyme anglais issu de l'expression ThermoPlastic Elastomer signifiant Élastomère thermoplastique. Les TPE constituent une famille de copolymères. Il peut s'agir notamment de copolymères à blocs. Mais il peut également s'agir de mélanges mécaniques de polymères, que l'on qualifie de mélanges polymèrepolymère. Ces mélanges comprennent souvent un polymère thermoplastique et un élastomère. Les TPE combinent alors les propriétés élastiques des élastomères et le caractère thermoplastique (ils fondent et durcissent, de manière réversible, sous l'action de la chaleur).

Les TPE sont plus souples que par exemple les PPGF30. Ils permettent ainsi au déflecteur fixe de se plier en cas de choc, et d'éviter d'endommager d'autres composants du véhicule automobile (ou au minimum de réduire les dommages). Le TPE permet aussi de maintenir solidaires les différents éléments du déflecteur fixe alors même qu'un ou plusieurs ponts auraient été brisés. Un garagiste peut alors démonter le déflecteur fixe endommagé et le remplacer par un nouveau déflecteur, après avoir remis en place les différents éléments déplacés par l'accident. Le déflecteur fixe permet ainsi d'absorber une partie du choc de l'accident, sans endommager les composants avoisinants, et sans laisser subsister de déchets, puisque le déflecteur fixe détruit reste en principe d'un seul tenant.

Selon l'invention revendiquée, un dispositif d'étanchéité 106 est agencé pour relier le dispositif d'obturation à un échangeur de chaleur 200. Ainsi, un flux d'air pénétrant dans le dispositif d'obturation est intégralement projeté sur l'échangeur, sans qu'une partie du flux ne soit déviée inutilement vers d'autres composants, alors que c'est l'échangeur que le dispositif d'obturation vise à refroidir. Le déflecteur fixe est monté sur le dispositif d'étanchéité. Selon l'invention revendiquée, le déflecteur fixe et le dispositif d'étanchéité sont formés d'une seule pièce. Le deuxième matériau peut être utilisé pour réaliser le dispositif d'étanchéité sous la forme d'une sorte de soufflet joignant le dispositif d'obturation à l'échangeur.

Selon un huitième mode de réalisation, le déflecteur fixe 102 d'un dispositif d'obturation selon l'un des premier au septième modes de réalisation est monté sur le dispositif d'obturation 100 via une pièce en matériau au moins aussi rigide que le premier matériau. Ce matériau est par exemple le premier matériau. Il peut également s'agir d'un matériau différent. Un tel montage rigide permet d'assurer une orientation fixe du déflecteur fixe.

Selon un neuvième mode de réalisation, les volets mobiles 101 et le déflecteur fixe 102 d'un dispositif d'obturation selon l'un des premier au huitième modes de réalisation ont chacun une forme allongée, la direction longitudinale du déflecteur fixe et les directions longitudinales des volets mobiles étant parallèles. Cependant, des variantes sont possibles. Par exemple, les volets mobiles peuvent être verticaux alors que le déflecteur fixe est horizontal.

## Revendications

1. Dispositif d'obturation (100) d'une entrée d'air de véhicule automobile, comprenant un ensemble de volets mobiles (101) et un déflecteur fixe (102), ledit déflecteur fixe (102) étant placé en aval de l'ensemble de volets mobiles (101) et étant agencé pour dévier une partie du flux d'air entrant dans le dispositif d'obturation vers une zone périphérique d'un échangeur de chaleur (200),
le déflecteur fixe (102) comprenant un premier (103, 104) et un deuxième (105) matériaux, le premier matériau étant plus rigide que le deuxième matériau,
ledit dispositif d'obturation (100) comprenant un dispositif d'étanchéité (106) agencé pour relier le dispositif d'obturation à un échangeur de chaleur (200) et pour qu'un flux d'air pénétrant dans le dispositif d'obturation soit projeté sur l'échangeur, le déflecteur fixe étant monté sur le dispositif d'étanchéité, le déflecteur fixe (102) et le dispositif d'étanchéité étant formés d'une seule pièce.

2. Dispositif d'obturation selon la revendication 1, dans lequel la surface du déflecteur fixe (102) est au moins deux fois plus importante que celle de chacun des volets mobiles (101).

3. Dispositif d'obturation selon l'une des revendications précédentes, dans lequel le déflecteur fixe (102) comprend plusieurs éléments longitudinaux parallèles (103) réalisés avec le premier matériau, reliés entre eux par des ponts (104) réalisés avec ce premier matériau, et plusieurs éléments longitudinaux parallèles (105) réalisés avec le deuxième matériau.

4. Dispositif d'obturation selon l'une des revendications précédentes, dans lequel le déflecteur fixe est obtenu par moulage par double injection.

5. Dispositif d'obturation selon la revendication 4, dans lequel le déflecteur fixe est obtenu par une injection du premier matériau suivie d'une injection du deuxième matériau.

6. Dispositif d'obturation selon l'une des revendications précédentes, dans lequel le premier matériau est du polypropylène comprenant 30% de fibres de verre.

7. Dispositif d'obturation selon l'une des revendications précédentes, dans lequel le deuxième matériau est de l'élastomère thermoplastique.

8. Dispositif d'obturation selon l'une des revendications précédentes, dans lequel le déflecteur fixe (102) est monté sur le dispositif d'obturation (100) via une pièce en matériau au moins aussi rigide que le premier matériau.

9. Dispositif d'obturation selon l'une des revendications précédentes, dans lequel les volets pilotés (101) et le déflecteur fixe (102) ont chacun une forme allongée, la direction longitudinale du déflecteur fixe et les directions longitudinales des volets mobiles étant parallèles.

## Patentansprüche

1. Verschlussvorrichtung (100) eines Lufteinlasses eines Kraftfahrzeugs, welche eine Anordnung von beweglichen Klappen (101) und eine unbewegliche Ablenkvorrichtung (102) umfasst, wobei die unbewegliche Ablenkvorrichtung (102) stromabwärts der Anordnung von beweglichen Klappen (101) angeordnet ist und dafür ausgelegt ist, einen Teil des in die Verschlussvorrichtung eintretenden Luftstroms in Richtung eines Umfangsbereichs eines Wärmetauschers (200) abzulenken,
wobei die unbewegliche Ablenkvorrichtung (102) ein erstes (103, 104) und ein zweites (105) Material umfasst, wobei das erste Material starrer als des zweite Material ist,
wobei die Verschlussvorrichtung (100) eine Dichtungsvorrichtung (106) umfasst, die dafür ausgelegt ist, die Verschlussvorrichtung mit einem Wärmetauscher (200) zu verbinden, und dafür, dass ein in die Verschlussvorrichtung eindringender Luftstrom auf den Wärmetauscher geblasen wird, wobei die unbewegliche Ablenkvorrichtung (102) und die Dichtungsvorrichtung aus einem Stück ausgebildet sind.

2. Verschlussvorrichtung nach Anspruch 1, wobei die Fläche der unbeweglichen Ablenkvorrichtung (102) mindestens doppelt so groß wie diejenige jeder der beweglichen Klappen (101) ist.

3. Verschlussvorrichtung nach einem der vorhergehenden Ansprüche, wobei die unbewegliche Ablenkvorrichtung (102) mehrere aus dem ersten Material hergestellte parallele Längselemente (103), die durch aus diesem ersten Material hergestellte Brücken (104) miteinander verbunden sind, und mehrere aus dem zweiten Material hergestellte parallele Längselemente (105) umfasst.

4. Verschlussvorrichtung nach einem der vorhergehenden Ansprüche, wobei die unbewegliche Ablenkvorrichtung durch Doppelspritzguss erhalten wird.

5. Verschlussvorrichtung nach Anspruch 4, wobei die unbewegliche Ablenkvorrichtung durch ein Spritzen des ersten Materials, gefolgt von einem Spritzen des zweiten Materials, erhalten wird.

6. Verschlussvorrichtung nach einem der vorhergehenden Ansprüche, wobei das erste Material Polypropylen ist, welches 30 % Glasfasern enthält.

7. Verschlussvorrichtung nach einem der vorhergehenden Ansprüche, wobei das zweite Material ein thermoplastisches Elastomer ist.

8. Verschlussvorrichtung nach einem der vorhergehenden Ansprüche, wobei die unbewegliche Ablenkvorrichtung (102) an der Verschlussvorrichtung (100) über ein Teil aus einem Material angebracht ist, das mindestens ebenso starr wie das erste Material ist.

9. Verschlussvorrichtung nach einem der vorhergehenden Ansprüche, wobei die gesteuerten Klappen (101) und die unbewegliche Ablenkvorrichtung (102) jeweils eine lang gestreckte Form aufweisen, wobei die Längsrichtung der unbeweglichen Ablenkvorrichtung und die Längsrichtungen der beweglichen Klappen parallel sind.

## Claims

1. Device (100) for sealing an air inlet of a motor vehicle, including a set of movable flaps (101) and a fixed deflector (102), said fixed deflector (102) being placed downstream of the set of movable flaps (101) and being arranged so as to redirect some of the air flow entering the sealing device toward a peripheral area of an heat exchanger (200),
the fixed deflector (102) including a first (103, 104) and a second (105) material, the first material being more rigid than the second material,
the sealing device (100) including a gasket (106) which is arranged so as to join the sealing device to an heat exchanger (200) and so that an air flow which penetrates into the sealing device is projected onto the heat exchanger, the fixed deflector being mounted on the gasket, the fixed deflector (102) and the gasket being formed in one piece.

2. Sealing device according to Claim 1, wherein the surface of the fixed deflector (102) is at least twice as large as that of each of the movable flaps (101).

3. Sealing device according to either of the preceding claims, wherein the fixed deflector (102) includes multiple parallel longitudinal elements (103) which are realized with the first material and are connected together by bridges (104) which are realized with said first material, and multiple parallel longitudinal elements (105) which are realized with the second material.

4. Sealing device according to one of the preceding claims, wherein the fixed deflector is obtained by means of double injection molding.

5. Sealing device according to Claim 4, wherein the fixed deflector is obtained by an injection of the first material followed by an injection of the second material.

6. Sealing device according to one of the preceding claims, wherein the first material is polypropylene which includes 30% glass fibers.

7. Sealing device according to one of the preceding claims, wherein the second material is thermoplastic elastomer.

8. Sealing device according to one of the preceding claims, wherein the fixed deflector (102) is mounted on the sealing device (100) via a part produced in a material which is at least as rigid as the first material.

9. Sealing device according to one of the preceding claims, wherein the controlled flaps (101) and the fixed deflector (102) each have an elongated form, the longitudinal direction of the fixed deflector and the longitudinal directions of the movable flaps being parallel.
